# EUROPEAN PATENT APPLICATION

(11) **EP 1 610 029 A1**
(43) Date of publication of application: **28.12.2005**
(21) Application number: 04723401.8
(22) Date of filing: 25.03.2004
(51) Int. Cl.: F16F 13/26

(54) **VIBRATION CONTROL DEVICE**

(30) Priority: 27.03.2003 JP 2003087059
(71) Applicant: Bridgestone Corporation, Tokyo 104-8340 (JP)
(72) Inventor: TASHIRO, Katsumi c/o BRIDGESTONE CORPORATION, Tokyo 1048340 (JP)
(74) Representative: Whalley, Kevin
(86) International application number: PCT/JP2004/004219
(87) International publication number: WO 2004/085874

(57) **Abstract**

In the vibration-proof apparatus of the present invention, a controller controls to successively and selectively operate one switching valve of N switching valves which are connected to an equilibrium chamber in synchronous with the inputted vibration from the vibration-generating portion, and alternately introduce negative pressure and atmospheric pressure, through the selected switching valve, into the equilibrium chamber. By this, in synchronous with the inputted vibration, the internal pressure (atmospheric pressure) of the equilibrium chamber is changed, and the internal volume thereof is also changed, and due to the change of the volume of the equilibrium chamber, the change (raise) of the liquid pressure occurring during the inputting of vibration within the pressure-receiving liquid chamber can be absorbed. At this point, since N switching valves are connected to the equilibrium chamber, as compared to the case in which one switching valve is provided, the cycle for operating each switching valve can be extended by about N times.

## Description

### Field of the Invention

The present invention relates to a vibration-proof apparatus which is employed for general industrial machines, for example, especially for automobiles or the like, and which can absorb and damp vibration transmitted from a vibration-generating portion such as an engine to a vibration-receiving portion such as a frame.

### Background Art

An engine mount, as a vibration-proof apparatus, is disposed between an engine and a vehicle body (frame) of an automobile. The engine mount absorbs vibration energy by an internal resistance or the like of a rubber elastic body, damps vibration from the engine, and suppresses vibration transmitted to the frame. However, the engine as the vibration-generating portion is used under a variety of driving conditions ranging from an idling driving state to a driving state at a maximum engine speed, so that frequency of vibration generated from the engine is changed over a wide range. Therefore, the engine mount should be suitable for a wide range of frequency. Accordingly, an engine amount of a so-called liquid seal-type has been proposed in which a pressure-receiving liquid chamber and a sub-liquid chamber, each having an inner wall which is partially formed by a rubber elastic body, are provided and connected therebetween by an orifice.

In such a liquid-sealing type engine mount as described above, two orifices are provided in order to deal with two types of inputted vibrations in the low frequency band. Then, these orifices are selectively operated in accordance with the frequency of the inputted vibration so that the engine mount can be suitable for two kinds of vibrations, that is, shake vibration and idle vibration. However, although these vibrations have frequencies about 10Hz and a range of 30 to 40Hz or less, the actual engine is used under a variety of driving conditions as described above, and vibration frequencies of vibration/noise transmitted through the engine mount to a vehicle compartment interior also are in a wide range. For this reason, a conventional liquid-seal type engine mount could not effectively absorb vibrations having intermediate frequencies between idling vibration and shake vibration or "confined sound" as vibration having higher frequency than these.

As a liquid-sealing type vibration-proof apparatus which is suitable for a wide range of inputted vibrations as described above, for example, the one disclosed in Japanese Patent Application (JP-A) No. 10-184773 is known. The vibration-proof apparatus disclosed in the document 1 comprises a diaphragm for structuring a portion of a partition of a pressure-receiving liquid chamber, an air chamber (equilibrium chamber) which is disposed adjacent to the pressure-receiving liquid chamber through the diaphragm, and switching valves for communicating the equilibrium chamber with a negative pressure supply source and an atmospheric pressure supply source, alternately, wherein the switching valves are controlled such that negative pressure and atmospheric pressure are introduced alternately into the equilibrium chamber in synchronous with the inputted vibration, and the pressure and the volume of the equilibrium chamber are changed in synchronous with the inputted vibration. Accordingly, the change of the volume of the equilibrium chamber allows the change of the liquid pressure generated by the inputted vibration within the pressure-receiving liquid chamber to be actively controlled and absorbed.

However, with the use of the vibration-proof apparatus as disclosed in JP-A No. 10-184773, since switching valves are operated with a certain time of delay to the input of each switching signal for switching ports of the switching valves, when the frequency of the inputted vibration becomes higher with a certain degree, it becomes difficult to introduce negative pressure and atmospheric pressure alternately into the equilibrium chamber in synchronous with the inputted vibration. For this reason, a problem has been caused that the inputted vibration having frequency which is higher than idle vibration cannot be sufficiently absorbed by this kind of the vibration-proof apparatus. Further, if the switching valves are continuously operated at a higher speed than their capacity in synchronous with the inputted vibration having high frequency, there is a concern that failure or deterioration of the switching valves may occur at an earlier stage.

### Disclosure of the Invention

In view of the aforementioned facts, an object of the present invention is to provide a vibration-proof apparatus which, even when vibration having high frequency is applied thereto, is able to alternately introduce negative pressure and an atmospheric pressure into the equilibrium chamber in synchronous with the inputted vibration with sufficiently high accuracy thus making it possible to prevent earlier occurrences of failure and deterioration of switching valves for introducing negative pressure and atmospheric pressure alternately into the equilibrium chamber.

The first aspect of the present invention is the vibration-proof apparatus comprising, a first mounting member which is connected to one of a vibration-generating portion and a vibration-receiving portion, a second mounting member which is connected to the other of the vibration-generating portion and the vibration-receiving portion, an elastic body which is disposed between the first mounting member and the second mounting member and which is elastically deformed due to inputted vibration from the vibration-generating portion, a pressure-receiving liquid chamber whose partition is partially formed by the elastic body and whose internal volume expands or contracts due to the deformation of the elastic body, a sub-liquid chamber which communicates with the pressure-receiving liquid chamber through a limiting path such that liquid can flow mutually between the pressure-receiving liquid chamber and the sub-liquid chamber, a movable partition portion which forms a part of the partition of the pressure-receiving liquid chamber, and which is movably supported in a direction in which the internal volume of the pressure-receiving liquid chamber expands or contracts, an equilibrium chamber which is disposed adjacent to the pressure-receiving liquid chamber, through the movable partition chamber, a switching valve which is connected to the equilibrium chamber, and which is connected to a negative pressure supply source and an atmospheric pressure supplying source, respectively, to permit the equilibrium chamber to communicate with one of the negative pressure supply source and the atmospheric pressure supply source, and a control means which controls the switching valve to alternatively introduce negative pressure and an atmospheric pressure into the equilibrium chamber synchronous with the inputted vibration from the vibration-generating portion, wherein a plurality of the switching valves is connected to the equilibrium chamber, and is successively and selectively operated by the control means synchronous with the inputted vibration from the vibration-generating portion.

In accordance with the vibration-proof apparatus according to the first aspect of the present invention, an elastic body is disposed between a first mounting member and a second mounting member, and is elastically deformed when inputting of vibration from the vibration-generating portion, by this, the inputted vibration is damped and absorbed by the internal resistance of the elastic body, at the same time, liquid can flow mutually through a limiting path between a pressure-receiving liquid chamber and a sub-liquid chamber each having the internal volume changing in accordance with the elastic deformation of the elastic body, whereby vibration can be absorbed and damped by liquid viscosity resistance and liquid column resonance.

Moreover, together with this, the control means controls N switching valves which are connected to the equilibrium chamber to be synchronized with the inputted vibration from the vibration-generating portion to successively and selectively operate one switching valve of the N switching valves, and to alternately introduce negative pressure and atmospheric pressure, through the selected switching valve, into the equilibrium chamber. Accordingly, in synchronous with the inputted vibration, the internal pressure (atmospheric pressure) of the equilibrium chamber is changed so that the internal volume is also changed. Due to the change of the volume of the equilibrium chamber, the change (raise) of liquid pressure that occurs during the inputting of vibration within the pressure-receiving liquid chamber can be absorbed, and the raise of a dynamic spring constant can be suppressed, whereby the inputted vibration can be absorbed and damped more effectively.

Here, since a plurality of switching valves (referred to N switching valves) is connected to the equilibrium chamber, as compared to the case in which one switching valve is provided, the cycle for operating each switching valve can be extended (made longer) by about N times. Consequently, if an appropriate number of switching valves to be equipped is determined in accordance with the maximum value of the frequency of the inputted vibration from the vibration-generating portion, even when vibration having high frequency is applied to the apparatus, the operational cycle of each switching valve can be sufficiently long. Accordingly, in synchronous with the inputted vibration with high accuracy, negative pressure and atmospheric pressure can be alternately introduced into the equilibrium chamber, it becomes unnecessary to operate each switching valves at a higher speed than its capacity, and the number of times of operations of each switching valve is reduced, whereby the occurrences of earlier failure and deterioration on switching valves can be prevented effectively.

The second aspect of the present invention is the vibration-proof apparatus comprising a first mounting member which is connected to one of a vibration-generating portion and a vibration-receiving portion, a second mounting member which is connected to the other of the vibration-generating portion and the vibration-receiving portion, an elastic body which is disposed between the first mounting member and the second mounting member and which is elastically deformed due to inputted vibration from the vibration-generating portion, a pressure-receiving liquid chamber whose partition is partially formed by the elastic body and whose internal volume expands or contracts due to the deformation of the elastic body, a sub-liquid chamber which communicates with the pressure-receiving liquid chamber through a limiting path such that liquid can flow mutually between the pressure-receiving liquid chamber and the sub-liquid chamber, a movable partition portion which forms a part of a partition of the sub-liquid chamber, and which is movably supported in a direction in which the internal volume of the sub-liquid chamber expands or contracts, an equilibrium chamber which is disposed adjacent to the sub-liquid chamber, through the movable partition chamber, a switching valve which is connected to the equilibrium chamber, and which is connected to a negative pressure supply source and an atmospheric pressure supplying source, respectively, to permit the equilibrium chamber to communicate with one of the negative pressure supply source and the atmospheric pressure supply source, and a control means which controls the switching valve to alternatively introduce negative pressure and an atmospheric pressure into the equilibrium chamber synchronous with the inputted vibration from the vibration-generating portion, wherein a plurality of the switching valves is connected to the equilibrium chamber, and is successively and selectively operated by the control means synchronous with the inputted vibration from the vibration-generating portion.

In accordance with the vibration-proof apparatus according to the second aspect of the present invention, operations and effects which are fundamentally the same as those in the vibration-proof apparatus according to the first aspect of the present invention can be obtained. However, since the movable partition portion forms a part of the partition of the sub-liquid chamber, and the equilibrium chamber is disposed adjacent to the sub-liquid chamber through the movable partition portion, if the cross-section and the length of the limiting path connecting the pressure-receiving liquid chamber and the sub-liquid chamber are determined (tuned) in accordance with the vibration frequency which is desired to be absorbed particularly effectively, the change of pressure in the sub-liquid chamber due to the alternate introduction of negative pressure and atmospheric pressure into the equilibrium chamber can be amplified by means of a resonance effect of the liquid flowing through the limiting path, and transmitted. Consequently, the inputted vibration having the specified frequency can be absorbed and damped particularly effectively.

### Brief Description of the Drawings

Fig. 1 is a cross-sectional view illustrating a structure of a main body of a vibration-proof apparatus according to a first embodiment of the present invention;
Fig. 2 is a side view of structures of the main body and a pressure-switching unit of the vibration-proof apparatus according to the first embodiment of the present invention;
Figs. 3(A) and 3(B) show a timing chart illustrating a relationship between a driving signal outputted from a controller to a switching valve 102 and an inner pressure of an equilibrium chamber in a vibration-proof apparatus shown in Fig. 9;
Figs. 4(A) and 4(B) show a timing chart illustrating a relationship between driving signals which are successively outputted from the controller to N switching valves, and an internal pressure of an equilibrium chamber in the vibration-proof apparatus shown in Fig. 2;
Figs. 5(A), (B), (C), and(D) show a timing chart illustrating a relationship between a driving signal outputted from the controller to a switching valve, the internal pressure of the equilibrium chamber, and a port switching state of the switching valve in the vibration-proof apparatus shown in Fig. 9 when vibration having comparatively high frequency is inputted thereto;
Figs. 6(A), (B) and (C) show a timing chart illustrating a relationship between driving signals which are successively outputted from the controller to N switching valves, the internal pressure of the equilibrium chamber, and the port switching state of the switching valve in the vibration-proof apparatus shown in Fig. 2 when vibration having comparatively high frequency F is inputted thereto;
Fig. 7 is a cross-sectional view illustrating a structure of a main body portion of a vibration-proof apparatus according to a second embodiment of the present invention;
Fig. 8 is a side view of structures of the main body portion and a pressure-switching unit of the vibration-proof apparatus according to the second embodiment of the present invention;
Fig. 9 is a side view of an example of a conventional vibration-proof apparatus having therein one switching valve 102 for introducing negative pressure and an atmospheric pressure alternately into the equilibrium chamber;
Fig. 10 is a side view illustrating a structure of a vibration-proof apparatus using a variant example of the pressure-switching unit according to the first embodiment of the present invention; and
Figs. 11(A) and (B) show a timing chart illustrating a relationship between driving signals which are successively outputted from the controller to N switching valves, and the internal pressure of the equilibrium chamber in the vibration-proof apparatus shown in Fig. 10.

### Best Mode for Carrying Out the Invention

Hereinafter, with reference to the drawings, a description of a vibration-proof apparatus according to an embodiment of the present invention will be made.

### (First embodiment)

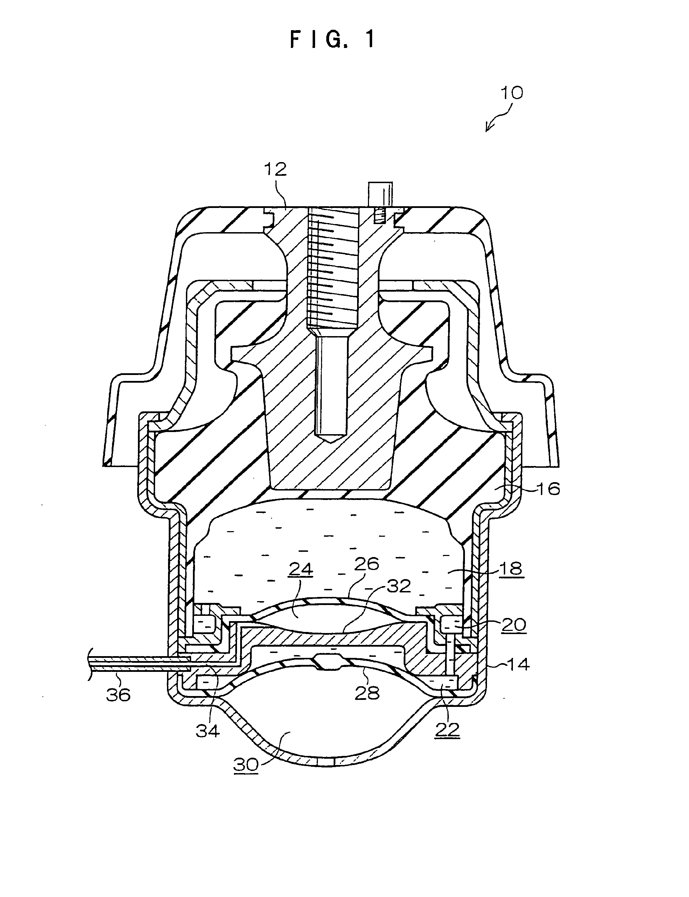

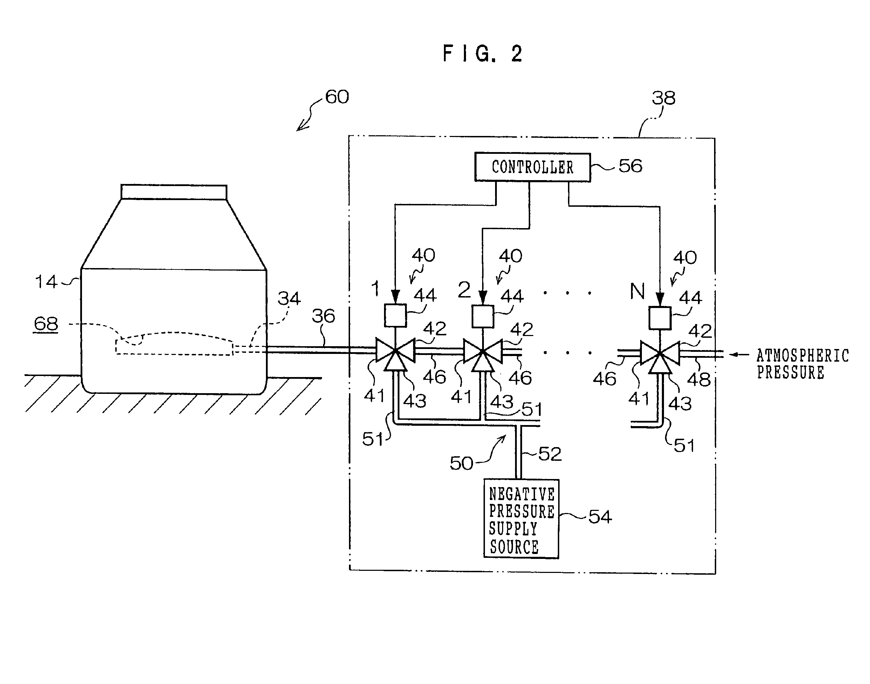

A vibration-proof apparatus according to a first embodiment of the present invention is shown in Figs. 1 and 2. A vibration-proof apparatus 10 is employed as an engine mount in which an engine as a vibration-generating portion in a car is supported to a vehicle body as a vibration-receiving portion.

As shown in Fig. 1, the vibration-proof apparatus 10 comprises a connecting fitting 12 which is connected to an engine using bolts (not shown), a holder 14 which is connected to a vehicle body side, and an elastic body 16, which is disposed between the connecting fitting 12 and the holder 14, and serves as a vibration-absorbing main body against vibration transmitted from an engine. The elastic body 16 is made of a rubber material, and integrally connected to the connecting fitting 12 by means of vulcanizing-adhesion or the like. Further, within the vibration-proof apparatus 10 are provided a pressure-receiving liquid chamber 18 whose inner wall is partially formed by the elastic body 16 and which seals therein a liquid, a first sub-liquid chamber 22 which is connected, through a first orifice 20 as a limiting path, to the pressure-receiving liquid chamber 18, an equilibrium chamber 24 which is provided, through a first diaphragm 26, at a portion of the pressure-receiving liquid chamber 18 and whose internal volume is expandable/contractible, and an air chamber 30 which is provided, through a second diaphragm 28, at an underside of the first sub-liquid chamber 22 and into which air is introduced all the time. Further, the pressure-receiving liquid chamber 18 and the first sub-liquid chamber 22 are partitioned by a disk-shaped divider 32 therebetween.

The vibration-proof apparatus 10 also has a communicating path 34 which penetrates through the divider 32, has one end which is open toward the equilibrium chamber 24, and has the other end which is open toward the exterior of the holder 14. The other end of the communicating path 34 is connected, through a nipple (not shown), to one end portion of a pressure pipe 36 comprising a pipe, a pressure-resistance hose and the like.

As shown in Fig. 2, the vibration-proof apparatus 10 has a pressure-switching unit 38 at the exterior of the holder 14, and the pressure-switching unit 38 is connected, through the communicating path 34 and the pressure pipe 36, to the equilibrium chamber 24. The pressure-switching unit 38 has N switching valves 40 (N is an integer of 2 or more), and each of N switching valves 40 is structured to be of a three-port type in which a first port 41 is selectively communicated with either one of a second port 42 and a third port 43. Further, each switching valve 40 comprises a valve body for switching the second port 42 or the third port 43 to be communicated with the first port 41, and an electromagnetic solenoid 44 for driving the valve body.

In each of the N switching valves 40 except for first and N-numbered switching valves, the second port 42 and the first port 41 are connected with each other in series by a connecting pipe 46, the first port 41 in the first switching valve 40 is connected to the other end portion of the pressure pipe 36, and the second port 42 in the N-numbered switching valve 40 is open to atmosphere through a serial pipe 48. Further, the third port 43 in each of the N switching valves 40 is connected to a parallel pipe 50, and connected to a negative pressure supply source 54 in parallel for supplying negative pressure lower than atmospheric pressure. In other words, the parallel pipe 50 comprises branch portions 51 which are branched into N at one end side of the parallel pipe and a collecting portion 52 at which the N-branched branch portions 51 are combined into one at the other end side thereof. The N-branch portions 51 are respectively connected to the third ports 43 in the N switching valves 40, and the collecting portion 52 is connected to the negative pressure supply source 54. Here, the negative pressure supply source 54 is structured by a surge tank in a sucking path for sucking air into an engine or a vacuum tank connected to this surge tank.

As shown in Fig. 2, the pressure-switching unit 38 has a controller 56 for controlling the N switching valves 40. The controller 56 outputs a driving signal as a control signal selectively to one of the N switching valves 40. In response to the outputted driving signal, the switching valve 40 switches a communication object of the first port 41 from the second port 42 to the third port 43. Further, when no driving signal is inputted from the controller 56, the switching valve 40 holds a state in which the first port 41 is communicated with the second port 42.

Accordingly, when the controller 56 outputs a driving signal to an arbitrary switching valve 40, the first port 41 is communicated with the third port 43 in the switching valve 40. At this time, in each of the remaining switching valves 40, since the first port 41 is communicated with the second port 42, negative pressure is supplied into the equilibrium chamber 24, through this switching valve 40 to which the driving signal is inputted, and switching valves 40 which are disposed at the equilibrium chamber 24 side with respect to this switching valve 40 and connected serially by the connecting pipes 46. Further, when a driving signal which has been applied to an arbitrary switching valve 40 is turned off by the controller 56, in all of the switching valves 40, the first ports 41 are communicated with the second ports 42. Consequently, atmospheric pressure is supplied, through all the switching valves 40 which are serially connected to each other, into the equilibrium chamber 24 by the connecting pipes 46, and in the equilibrium chamber 24, it is changed from a state of negative pressure to a state of ordinary pressure slightly lower than atmospheric pressure.

Next, a control of a plurality of (N-)switching valves 40 by the controller 56 according to the present embodiment will be explained.

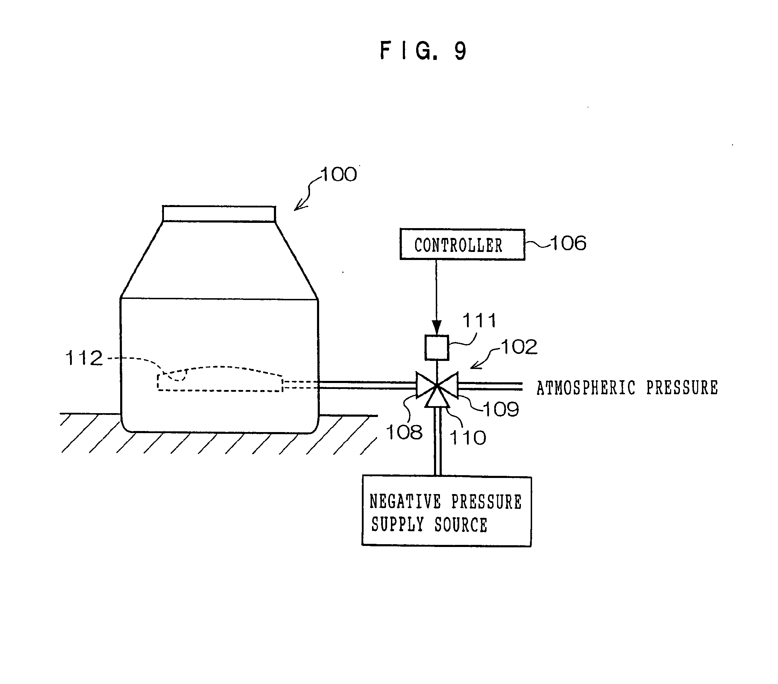

In Fig. 9, an example of a conventional vibration-proof apparatus 100 having therein one switching valve 102 for alternately introducing negative pressure and atmospheric pressure into an equilibrium chamber is shown for the comparison with the vibration-proof apparatus 10 of the present embodiment. Since the internal structure of the vibration-proof apparatus 100 comprising a pressure-receiving liquid chamber, a sub-liquid chamber, an orifice, an equilibrium chamber 112 and the like is fundamentally structured in the same manner as in the vibration-proof apparatus 10 according to the present embodiment, a description thereof will be omitted.

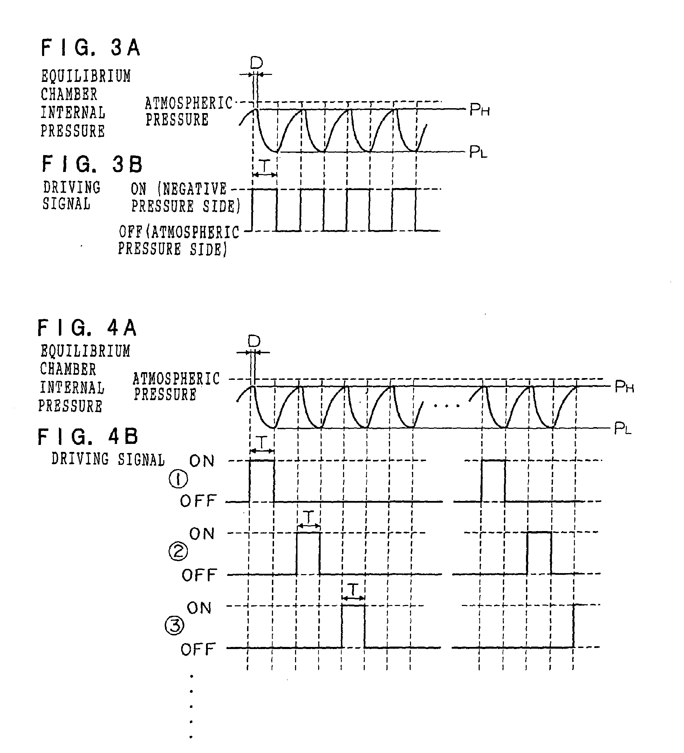

Figs. 3(A) and 3(B) show a timing chart illustrating a relationship between a driving signal outputted from a controller 104 to one switching valve 102 and an internal pressure of the equilibrium chamber 112 in the vibration-proof apparatus 100 shown in Fig. 9, and Figs. 4(A) and 4(B) show a timing chart illustrating a relationship between driving signals which are successively outputted from the controller 56 to N switching valves 40, and the internal pressure of the equilibrium chamber 24 in the vibration-proof apparatus 10 according to the present embodiment. ;

The timing chart shown in Figs. 3(A) and 3(B) shows a case in which, when vibration having frequency F is inputted from the vibration-generating portion to the conventional vibration-proof apparatus 100, the controller 104 controls the switching valve 102 to alternately introduce negative pressure and atmospheric pressure into the equilibrium chamber 112 in synchronous with the inputted vibration having frequency F. On the other hand, the timing chart shown in Figs. 4(A) and 4(B) illustrates a case in which, when vibration having frequency F is inputted from the vibration-generating portion to the vibration-proof apparatus 10 according to the present embodiment, in synchronous with the inputted vibration having frequency F, the controller 56 controls N switching valves 40 successively to introduce negative pressure and atmospheric pressure into the equilibrium chamber 24.

In the conventional vibration-proof apparatus 100, when vibration having frequency F is inputted thereto, as shown in Fig. 3(B), the controller 104 outputs a driving signal to an electromagnetic solenoid 111 of one switching valve 102 at the cycle of 1/F over a predetermined decompression time T. Therefore, negative pressure is supplied from the negative pressure supply source 54, through the switching valve 102, to the equilibrium chamber 112. Decompressing of the internal pressure of the equilibrium chamber 112 from pressure P_{H} which is slightly lower than atmospheric pressure begins. At this point, as shown in Fig. 3(A), the internal pressure of the equilibrium chamber 112 is decompressed so as to be approximated to the negative pressure which is supplied from the negative pressure supply source 54, i.e., the internal pressure (vacuum pressure) within the negative pressure supply source 54, to reach pressure P_{L} that corresponds to the vacuum pressure and the decompression time T. Further, a certain delay time D occurs from the time when the controller 104 outputs a driving signal to the switching valve 102 till the time when the switching valve 102 completes a port switching operation. Accordingly, even when the controller 104 starts outputting a driving signal to the switching valve 102, since then, unless the time substantially corresponding to the delay time D in the switching valve 102 has elapsed, the actual decompression of the internal pressure within the equilibrium chamber 112 does not begin.

Further, after the decompression time T has elapsed, when the controller 104 stops outputting a driving signal, as shown in Fig. 3(A), atmospheric pressure is introduced, through the switching valve 102, into the equilibrium chamber 112, and the internal pressure of the equilibrium chamber 112 is raised from the state of negative pressure to pressure P_{H} that is slightly lower than atmospheric pressure. At this time, a certain delay time occurs from the time when the controller 104 stops outputting a driving signal to the switching valve 102 till the time when the port switching operation is completed by the switching valve 102. However, the delay time becomes shorter than the delay time between the start of outputting a driving signal and the finish of switching the switching valve 102.

In the vibration-proof apparatus 100, as described above, by the controller 104 controlling single switching valve 102, as shown in Fig. 3(A), the internal pressure within the equilibrium chamber 112 is changed so as to draw a substantially wavy waveform between the pressure P_{H} and the pressure P_{L}. Here, since the change of the internal volume in accordance with the change of the internal pressure within the equilibrium chamber 112 is synchronized with the inputted vibration, due to the change of the internal volume of the equilibrium chamber 112, change of liquid pressure that occurs during the inputting of vibration within the pressure-receiving liquid chamber can be absorbed, whereby the inputted vibration can be absorbed and damped effectively.

On the other hand, in the vibration-proof apparatus 10 according to the present embodiment, when vibration having frequency F is inputted thereto, as shown in Fig. 4(B), the cycle at which the controller 56 outputs a driving signal to arbitrary one switching valve 40 is N/F. In other words, to each switching valve 40, a driving signal is outputted at the cycle which is N times as much as the cycle of 1/F at which a driving signal is outputted to the switching valve 102 in the conventional vibration-proof apparatus 10. Further, the controller 56 selects one switching valve 40 from N switching valves 40 successively (e.g., 1st, 2nd... N-numbered, 1st....), and outputs a driving signal to the selected switching valve 40 over a predetermined decompression time T. Therefore, negative pressure is supplied from the negative pressure supply source 54, through the switching valve 40 having a driving signal inputted thereto, into the equilibrium chamber 24. Accordingly, in the same manner as in the conventional vibration-proof apparatus 100, the internal pressure of the equilibrium chamber 24 is reduced from pressure P_{H} to pressure P_{L}.

After the elapse of the decompression time T, when the controller 56 stops outputting a driving signal to one selected switching valve 40, atmospheric pressure is introduced, through the switching valve 40, into the equilibrium chamber 24, and the internal pressure of the equilibrium chamber 112 is raised from the pressure P_{L} to the pressure P_{H}.

With the vibration-proof apparatus 10, by the controller 56 controlling N switching valves 40 as described above, the internal pressure of the equilibrium chamber 24 is changed so as to draw a substantially wavy waveform between the pressure P_{H} and the pressure P_{L}. Here, since the change of the internal volume in accordance with that of the internal pressure within the equilibrium chamber 24 is supposed to be synchronized with the inputted vibration, the change of liquid pressure in the pressure-receiving liquid chamber 18 that occurs when vibration is inputted can be absorbed due to the change of internal volume of the equilibrium chamber 24, and the inputted vibration can be absorbed and damped effectively.

In the vibration-proof apparatus 10 according to the present embodiment, as compared to the case of the vibration-proof apparatus 100, the operation cycle of one switching valve 40 becomes N times as much as that in the case. Therefore, it is natural that the number of times of operations of one switching valve 40 become 1/N times the operational frequency of the switching valve 102. Accordingly, in accordance with the vibration-proof apparatus 10 of the present embodiment, as compared to the conventional vibration-proof apparatus 100, the occurrence of machine failure due to failures of the switching valves 40 can be suppressed, whereby machine life can be extended much longer.

On the other hand, in the conventional vibration-proof apparatus 100 shown in Fig. 9, the higher the frequency F of the inputted vibration, the more serious the problem with the delay time D during which ports are switched by the switching valve 102 in response to the inputting of a driving signal. Next, this point will be explained in more detail with a comparison between the conventional vibration-proof apparatus 100 and the vibration-proof apparatus 10 according to the present embodiment.

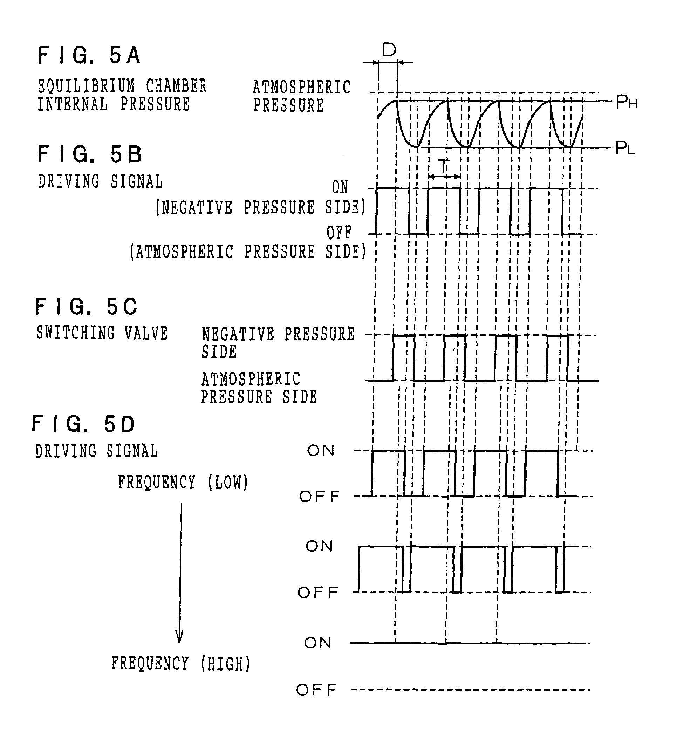

Timing chart of Figs. 5(A), (B), (C) and (D) shows a relationship between a driving signal outputted from the controller 104 to one switching valve 102, an internal pressure of the equilibrium chamber 112, and a port switching state of the switching valve 102 in the conventional vibration-proof apparatus 100 when vibration having a comparatively high frequency F is inputted thereto. As shown in Figs. 5(B) and (C), even when a driving signal is outputted from the controller 104 to one switching valve 102, the delay time D is required for a first port 108 of the switching valve 102 to finish switching from a second port 109 at an atmospheric pressure side to a third port 110 at the negative supply source 54 side. This is a phenomenon that occurs all the time without being affected by the frequency F of the inputted vibration. However, the higher the frequency F of the inputted vibration, the larger the ON time ratio (duty ratio) of the driving signal at the operation cycle 1/F of the switching valve becomes. The increase of the duty ratio leads to the decrease of the absolute value of the time during which the first port 108 is communicated with the second port 109 at the atmospheric pressure side in the switching valve 102. For this reason, as the duty ratio increases from a predetermined level, first, the internal pressure of the equilibrium chamber 112 becomes unable to be increased to the level of the pressure P_{H} substantially close to the atmospheric pressure, the difference between the pressure P_{H} and the pressure P_{L} is reduced, whereby effects due to damping with respect to the inputted vibration using the vibration-proof apparatus 100 is also deteriorated.

Further, Fig. 5(D) shows the change of a driving signal (duty ratio) outputted from the controller 104 to the switching valve 102 in the case in which the frequency F of the inputted vibration is gradually increased. As shown in Fig. 5(D), the higher the frequency F, the larger the duty ratio, and finally, the duty ratio becomes 100%. Accordingly, the first port 108 of the switching valve 102 is kept in connection with the third port 110 at the negative pressure supply source 54 side, and the internal pressure of the equilibrium chamber 112 is maintained at a constant pressure P_{L}. Theoretically, when the delay time D in the switching valve 102 is not more than the operational cycle 1/F, the duty ratio of a driving signal becomes 100% thus disabling the switching operation of the switching valve 102.

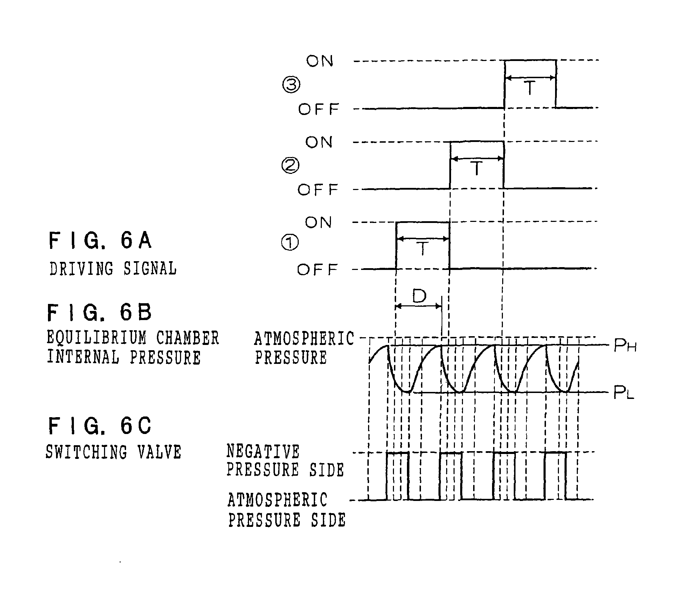

On the other hand, Figs. 6(A), 6(B), and 6(C) show a timing chart illustrating a relationship among driving signals which are successively outputted from the controller 56 to N switching valves 40, the internal pressure of the equilibrium chamber 24, and the port switching state of the switching valve 40 in the vibration-proof apparatus 10 according to the present embodiment when vibration having relatively high frequency F is inputted thereto. As shown in Fig. 5(A), in the vibration-proof apparatus 10 according to the present embodiment, the duty ratio of a driving signal with respect to arbitrary one switching valve 40 becomes 1/N times as much as that in the conventional vibration-proof apparatus 100. By this, if frequency F of the inputted vibration is high, if the outputting timing of a driving signal is appropriately accelerated in accordance with the delay time D, the overlapping of the driving signal with the previous driving signal can be prevented, whereby the off-time of the driving signal can be reliably secured with a margin time over the required time. However, the output timing of a diving signal which is outputted to one switching valve 40 which is operated at certain timing and that of a driving signal which is outputted to one switching valve 40 which is operated next can be overlapped with each other.

Therefore, in according with the vibration-proof apparatus 10 according to the present embodiment, by using N switching valves 40 in order to introduce negative pressure and atmospheric pressure into the equilibrium chamber 24, it is possible to obtain the effect equivalent to the effect obtained when responsiveness of one switching valve has been improved a great deal in the vibration-proof apparatus using one switching valve. Even when vibration having high frequency F is inputted to the apparatus, a pressure difference between pressure P_{H} and pressure P_{L} of the equilibrium chamber 24 can be maintained sufficiently large, and with being synchronized with the inputted vibration with high accuracy, negative pressure and atmospheric pressure can be introduced alternately into the equilibrium chamber 24.

Next, an operation and an effect of the vibration-proof apparatus 10 according to the present embodiment having the above-described structure will be explained. In other words, in the vibration-proof apparatus 10, due to elastic deformation of the elastic body 16 when inputting of vibration from the engine as the vibration-generating portion, the inputted vibration is damped and absorbed by the internal resistance of the elastic body 16. Simultaneously, liquid can flow mutually, through the first orifice 20, between the pressure-receiving liquid chamber 18 and the first sub-chamber 22 each having the internal volume which is changed in accordance with the elastic deformation of the elastic body 16. Consequently, due to the operations of viscosity resistance and liquid column resonance of the liquid, vibration can be absorbed and damped.

Moreover, together with this, the controller 56 controls N switching valves 40 which are connected to the equilibrium chamber 24 to be synchronized with the inputted vibration from the vibration-generating portion to successively and selectively operate one switching valve 40 of the N switching valves 40, and to alternately introduce negative pressure and atmospheric pressure, through the selected switching valve 40, into the equilibrium chamber 24. Accordingly, in synchronous with the inputted vibration, the internal pressure (atmospheric pressure) of the equilibrium chamber 24 is changed so that the internal volume is also changed. Due to the change of the volume of the equilibrium chamber 24, the change (raise) of liquid pressure that occurs during the inputting of vibration within the pressure-receiving liquid chamber 18 can be absorbed, and the raise of a dynamic spring constant can be suppressed, whereby the inputted vibration can be absorbed and damped more effectively.

Here, since N switching valves 40 are connected to the equilibrium chamber 24, the cycle for operating each switching valve 40 can be extended by about N times as long as the cycle in the case in which one switching valve is provided. Consequently, if the number of switching valves to be equipped is appropriately determined in accordance with the maximum value of frequency F of the inputted vibration from the engine, for example, during the application of vibration having high frequency F, since the operation cycles of the respective switching valves 40 can be set a sufficiently long time, negative pressure and atmospheric pressure can be introduced alternately into the equilibrium chamber 24 in synchronous with the inputted vibration with high accuracy. Further, the operation of the switching valves 40 at a higher speed than their capacity is not required, and the number of times of operations itself of each switching valve 40 can be reduced, whereby earlier occurrences of failure and deterioration of the switching valves 40 can be prevented effectively.

In addition, in the vibration-proof apparatus 10 according to the present embodiment, although N switching valves 40 are connected to the equilibrium chamber 24 in series, there is a concern that, due to the increase of installation numbers of the switching valves 40, the switching valves 40 unexpectedly play a role of air-supplying/discharging resistance whereby a phenomenon occurs in which introduction of negative pressure and atmospheric pressure into the equilibrium chamber 40 is blocked. For this reason, it is advisable that N switching valves 40 are connected to the equilibrium chamber 24 in parallel, or, N switching valves 40 are divided into some groups such that the switching valves 40 in each group are connected to each other in series and the switching valves 40 belonging to these groups are connected to the equilibrium chamber 24 in parallel.

### (Variant example of the first embodiment)

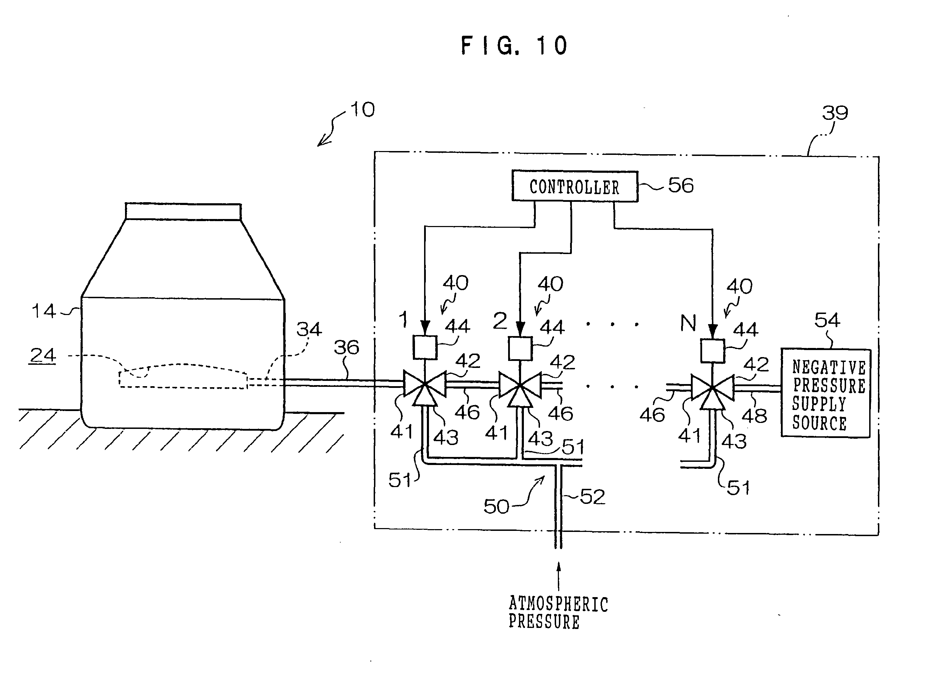

Fig. 10 shows a variant example of a pressure-switching unit in the vibration-proof apparatus according to the first embodiment of the present invention. In the pressure-switching unit 39, the negative pressure supply source 54 is connected to the tip end of the serial pipe 48, and the tip end of the collecting portion 52 of the parallel pipe 50 is open to the atmosphere. By this, when the first ports 41 of all of the switching valves 40 are connected to the third ports 42, negative pressure is supplied from the negative pressure supply source 54 into the equilibrium chamber 24, and when the first port 41 of one switching valve 40 is connected to the second port 42, and the first ports 41 of the remaining switching valves 40 are connected to the third ports 43, atmospheric pressure is supplied into the equilibrium chamber 24.

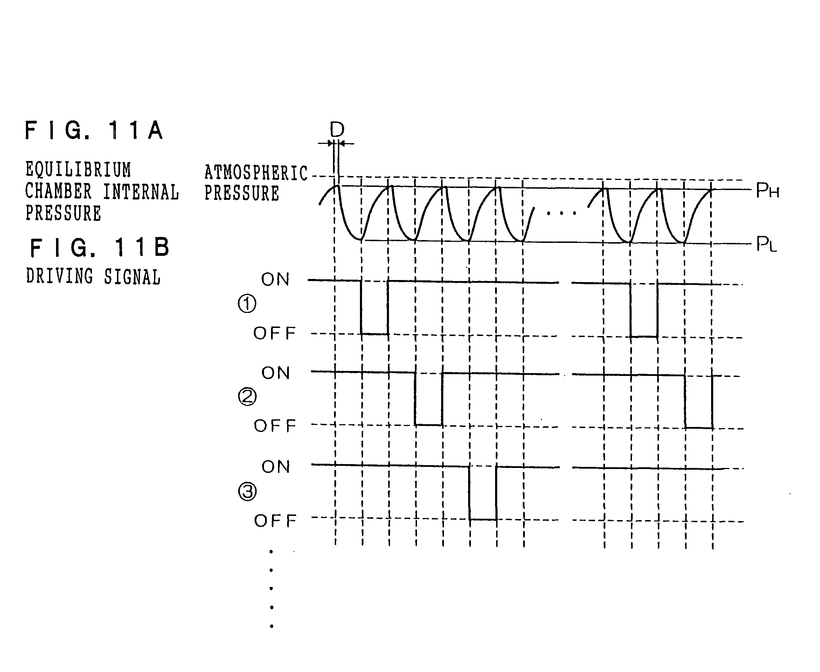

Figs. 11(A) and 11(B) show a timing chart of a relationship between the driving signal, which are outputted from the controller 56 to each switching valve 40 and the internal pressure of the equilibrium chamber 24 in the case in which the pressure-switching unit 39 having the above-described structure is adopted. As shown in Figs. 11(A) and 11(B), in the case where the pressure-switching unit 39 shown in Fig. 10, the controller 56 uses on/off output patterns of driving signals outputted to the respective switching valves 40, which patterns are obtained by reversing those in the case where the pressure-switching unit 38 as shown in Fig. 2. In other words, the controller 56 must switch off the driving signal outputted to one switching valve 40 selected from N switching valves 40 over the time T at the cycle of N/F, whereby atmospheric pressure is introduced, through the switching valve 40 having the driving signal switched-off, into the equilibrium chamber 24.

Even when the pressure-switching unit 39 as described above is used, by simply reversing on/off output patterns of the driving signals than those in which the pressure-switching unit 38 is used, operations and effects which are fundamentally the same as those in the pressure-switching unit 38 are obtained. However, in the pressure-switching unit 39, since driving signals must be continuously outputted to (N-1) switching valves 40, power consumption is increased. However, if the operation time during which the communication object of the first port 41 is switched from the second port 42 to the third port 43 is extremely shorter than that during which the communication object of the first port 41 is switched from the third port 43 to the second port 42, use of the pressure-switching unit 39 is more advantageous than that of the pressure-switching unit 38 from the standpoint of responsiveness when the decompression of the equilibrium chamber 24 is started.

### (Second embodiment)

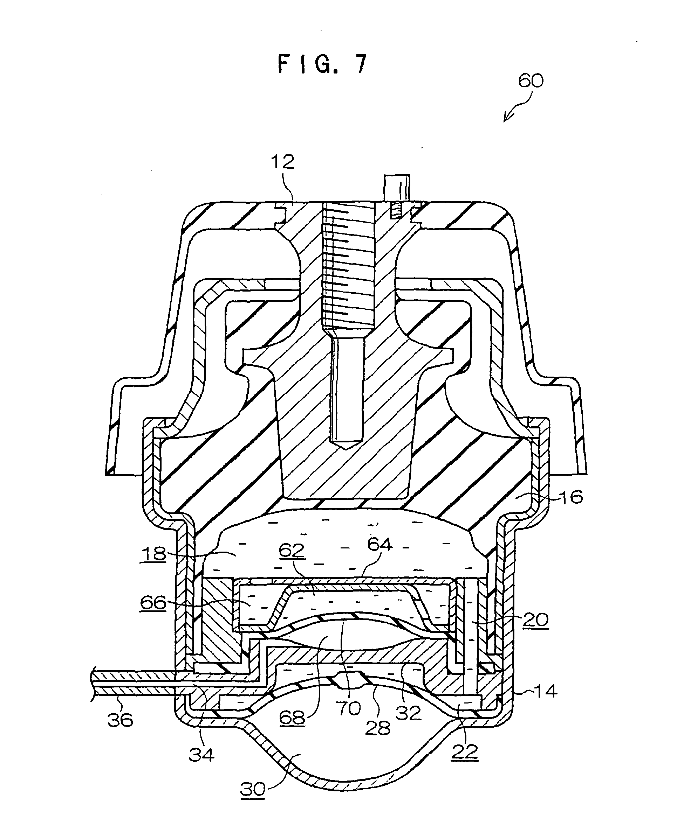

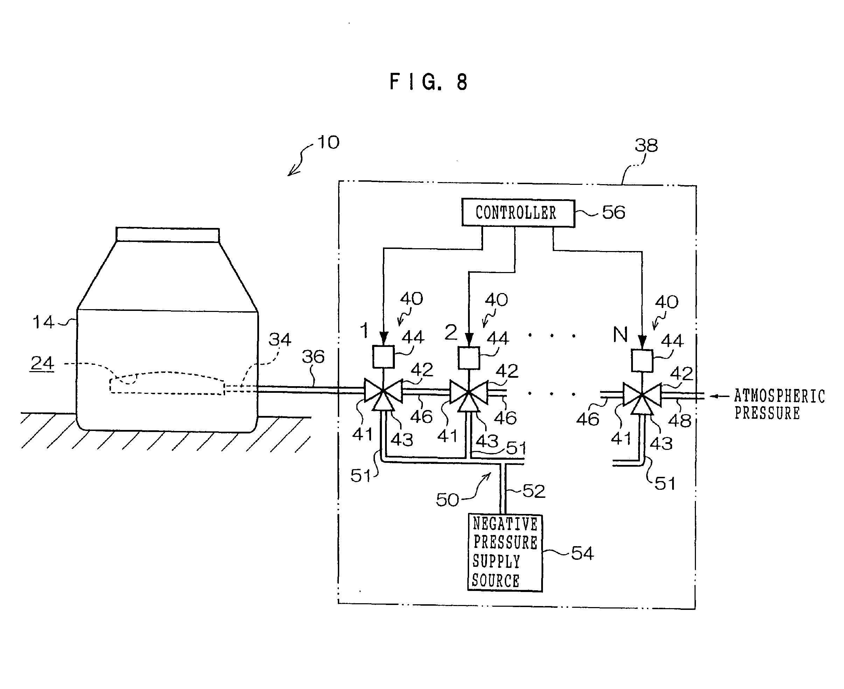

Figs. 7 and 8 show a vibration-proof apparatus according to a second embodiment of the present invention. In the same manner as the vibration-proof apparatus 10 according to the first embodiment of the present invention, a vibration-proof apparatus 60 is also employed as an engine mount for supporting the engine as the vibration-generating portion in a car to a vehicle body as the vibration-receiving portion. Further, in the vibration-proof apparatus 60 according to the second embodiment of the present invention, portions identical to those in the vibration-proof apparatus 10 according to the first embodiment of the present invention are denoted by the same reference numerals and a description thereof will be omitted.

The vibration-proof apparatus 60 according to the present embodiment is different from the vibration-proof apparatus 10 according to the first embodiment of the present invention in that a second sub-liquid chamber 62 is additionally provided in the holder 14, and an equilibrium chamber 68 is disposed adjacent to the second sub-liquid chamber 62. Here, a dividing member 64 for defining the pressure-receiving liquid chamber 18 and the second sub-liquid chamber 62 is disposed in the holder 14. The dividing member 64 is provided with a second orifice 66 as a limiting path connecting the pressure-receiving liquid chamber 18 and the second sub-liquid chamber 64. A third diaphragm 70 for defining the second sub-liquid chamber 62 and the equilibrium chamber 68 is fixed between the dividing member 64 and the divider 32. The third diaphragm 70 is elastically deformable in a direction in which the internal volumes of the second sub-liquid chamber 62 and the equilibrium chamber 68 expand or contract.

Further, as shown in Fig. 8, in the same manner as in the vibration-proof apparatus 10 according to the first embodiment of the present invention, the pressure-switching unit 38 is connected, through the communication path 34 and the pressure pipe 36, to the equilibrium chamber 68. Therefore, the pressure-switching unit 38 is synchronized with the inputted vibration to alternately introduce negative pressure and atmospheric pressure into the equilibrium chamber 68 whereby the internal volume of the equilibrium chamber 24 is changed, and the liquid pressure within the second sub-liquid chamber 62 adjacent to the equilibrium chamber 68 through the third diaphragm 70 can be changed. The change of the liquid pressure of the second sub-liquid chamber 62 is transmitted, through the second orifice 66, to the pressure-receiving liquid chamber 18.

Accordingly, in the same manner as in the vibration-proof apparatus 10 according to the first embodiment of the present invention, also by the vibration-proof apparatus 60 according to the present embodiment, as the internal pressure (atmospheric pressure) of the equilibrium chamber 68 is changed in synchronous with the inputted vibration, the internal volume thereof is changed, and as the volume of the equilibrium chamber 68 is changed, the liquid pressure of the second sub-liquid chamber 62 is changed. When the change of liquid pressure is transmitted, through the second orifice 66, to the pressure-receiving liquid chamber 18, the change (raise) of the liquid pressure that occurs during the inputting of vibration within the pressure-receiving liquid chamber 18 can be absorbed, and the raise of a dynamic spring constant is suppressed, whereby the inputted vibration can be absorbed and damped more effectively.

Also in the vibration-proof apparatus 10 of the present embodiment, since N switching valves 40 are connected to the equilibrium chamber 24, and the controller 56 controls the respective switching valves 40 to operate successively at the operational cycle of N/F, even when vibration having high frequency F is applied to the apparatus, the switching valves 40 are synchronized with the inputted vibration with high accuracy to alternately introduce negative pressure and atmospheric pressure into the equilibrium chamber 24. Further, the operation of the switching valves 40 at a higher speed than their capacity is not needed, and the number of times of operations itself of each switching valve 40 can be reduced, whereby the occurrences of earlier failure and deterioration on the switching valves 40 can be prevented effectively.

Moreover, in the vibration-proof apparatus 60 according to the present embodiment, since the third diaphragm 70 forms a part of a partition of the second sub-liquid chamber 62, and the equilibrium chamber 68 is disposed adjacent to the second sub-liquid 62 through the third diaphragm 70, if the cross-section and the length of the second orifice 66 connecting the pressure-receiving chamber 18 and the second sub-liquid chamber 62 are determined (tuned) in accordance with the vibration frequency that is desired to be absorbed particularly effectively, the change of liquid pressure in the second sub-liquid chamber 62 due to the alternate introduction of negative pressure and atmospheric pressure into the equilibrium chamber 68 can be amplified by means of a resonance effect of the liquid flowing through the second orifice 66, and transmitted to the pressure-receiving liquid chamber 18, whereby the inputted vibration having the specified frequency can be absorbed and damped particularly effectively.

As described above, in accordance with the vibration-proof apparatus of the present invention, even when vibration having high frequency is inputted to the apparatus, negative pressure and atmospheric pressure are introduced alternately into the equilibrium chamber in synchronous with the inputted vibration. Accordingly, occurrences of earlier failure or deterioration of the switching valves for introducing negative pressure and atmospheric pressure alternately into the equilibrium chamber can be prevented.

## Claims

1. A vibration-proof apparatus comprising:
a first mounting member which is connected to one of a vibration-generating portion and a vibration-receiving portion;
a second mounting member which is connected to the other of the vibration-generating portion and the vibration-receiving portion;
an elastic body which is disposed between the first mounting member and the second mounting member and which is elastically deformed due to inputted vibration from the vibration-generating portion;
a pressure-receiving liquid chamber whose partition is partially formed by the elastic body and whose internal volume expands or contracts due to the deformation of the elastic body;
a sub-liquid chamber which communicates with the pressure-receiving liquid chamber through a limiting path such that liquid can flow mutually between the pressure-receiving liquid chamber and the sub-liquid chamber;
a movable partition portion which forms a part of the partition of the pressure-receiving liquid chamber, and which is movably supported in a direction in which the internal volume of the pressure-receiving liquid chamber expands or contracts;
an equilibrium chamber which is disposed adjacent to the pressure-receiving liquid chamber, through the movable partition chamber;
a switching valve which is connected to the equilibrium chamber, and which is connected to a negative pressure supply source and an atmospheric pressure supplying source, respectively, to permit the equilibrium chamber to communicate with one of the negative pressure supply source and the atmospheric pressure supply source; and
a control means which controls the switching valve to alternatively introduce negative pressure and an atmospheric pressure into the equilibrium chamber synchronous with the inputted vibration from the vibration-generating portion, wherein
a plurality of the switching valves is connected to the equilibrium chamber, and is successively and selectively operated by the control means synchronous with the inputted vibration from the vibration-generating portion.

2. A vibration-proof apparatus comprising:
a first mounting member which is connected to one of a vibration-generating portion and a vibration-receiving portion;
a second mounting member which is connected to the other of the vibration-generating portion and the vibration-receiving portion;
an elastic body which is disposed between the first mounting member and the second mounting member and which is elastically deformed due to inputted vibration from the vibration-generating portion;
a pressure-receiving liquid chamber whose partition is partially formed by the elastic body and whose internal volume expands or contracts due to the deformation of the elastic body;
a sub-liquid chamber which communicates with the pressure-receiving liquid chamber through a limiting path such that liquid can flow mutually between the pressure-receiving liquid chamber and the sub-liquid chamber;
a movable partition portion which forms a part of a partition of the sub-liquid chamber, and which is movably supported in a direction in which the internal volume of the sub-liquid chamber expands or contracts;
an equilibrium chamber which is disposed adjacent to the sub-liquid chamber, through the movable partition chamber;
a switching valve which is connected to the equilibrium chamber, and which is connected to a negative pressure supply source and an atmospheric pressure supplying source, respectively, to permit the equilibrium chamber to communicate with one of the negative pressure supply source and the atmospheric pressure supply source; and
a control means which controls the switching valve to alternatively introduce negative pressure and an atmospheric pressure into the equilibrium chamber synchronous with the inputted vibration from the vibration-generating portion, wherein
a plurality of the switching valves is connected to the equilibrium chamber, and is successively and selectively operated by the control means synchronous with the inputted vibration from the vibration-generating portion.

3. The vibration-proof apparatus according to 1 or 2, **characterized in that** the plurality of the switching valves are connected serially, through pipes, to the equilibrium chamber.

4. The vibration-proof apparatus according to 1 or 2, **characterized in that**, when N switching valves are connected to the equilibrium chamber and F is the frequency of the inputted vibration from the vibration-generating portion, each of the plurality of the switching valves is successively and selectively operated substantially at the cycle of N/F.
